# EUROPÄISCHE PATENTSCHRIFT

(11) **EP 1 988 517 B1**
(45) Veröffentlichungstag und Bekanntmachung des Hinweises auf die Patenterteilung: **28.07.2010**
(21) Anmeldenummer: 08005851.4
(22) Anmeldetag: 27.03.2008
(51) Int. Cl.: G08B 5/36

(54) **Gefahrenmelder mit LED**
Danger warning system with LED
Détecteur de danger doté d'une DEL

(30) Priorität: 03.05.2007 DE 102007020769
(43) Veröffentlichungstag der Anmeldung: 05.11.2008
(73) Patentinhaber: Novar GmbH, 41469 Neuss (DE)
(72) Erfinder: Krippendorf, Tido, 41812 Erkelenz (DE); Politze, Heiner, 41469 Neuss (DE)
(74) Vertreter: Prietsch, Reiner

(56) Entgegenhaltungen:
- DE-A1- 4 022 498
- DE-A1-102004 036 743

## Beschreibung

Die Erfindung betrifft einen Gefahrenmelder der in den Oberbegriffen der Ansprüche 1 und 6 angegebenen Art.

Ein derartiger Melder ist aus der DE-A-10 2004 036 743 bekannt. Kurz zusammengefasst, aktiviert seine Signalverarbeitungsschaltung im Alarmzustand oder in einem über die Zentrale ausgelösten Testbetrieb eine leuchtstarke LED. Weil nur eine begrenzte Speiseleistung zur Verfügung steht, wird die LED in einem Blinktakt von z.B. 1 Hz und einer kurzen "EIN"-Zeit im Bereich von etwa 30 ms betrieben und zusätzlich in dieser "EIN"-Zeit in einer raschen Pulsfolge ein- und ausgeschaltet, zum Beispiel mit einer Pulsdauer von 20 µs je Pulsperiode von z.B. 200 µs. In einigen Ländern besteht jedoch die Vorschrift, dass diese melder-eigene, rot leuchtende LED im Alarmfall dauernd und mit einer Helligkeit leuchten muss, die erheblich größer als die Helligkeit der z.B. bei Brandmeldern grundsätzlich bekannten LED ist, die lediglich zur Anzeige des Betriebszustandes (z.B. Ruhe, Test und Alarm) dient.

Zwar entwickeln insbesondere rote LEDs nach dem aktuellen Stand der Technik bereits bei z.B. 3 mA eine der vorgenannten Forderung entsprechende, ausreichend hohe Lichtstärke. Übliche Zentralen und an diese angeschlossene Meldelinien mit z.B. bis zu 256 Meldern sind aber für Melder ausgelegt, die bei einer Linienspannung von 18 bis 19 V im Ruhe- bzw. Bereitschaftszustand ca. 100 µA aufnehmen. Würde ein Melder mit einer solchen LED im Alarmzustand rund 3 mA verbrauchen, dann würde die Linienspannung so stark absinken, dass nur noch wenige, örtlich nahe an der Zentrale liegende Melder funktionsfähig wären. Deshalb bietet es sich an, die LED zwar dauernd, jedoch nach dem aus der oben genannten DE-A-10 2004 036 743 bekannten, geschalteten Prinzip zu betreiben, weil diese rasche Pulsfolge vom menschlichen Auge wie ein Dauerlicht wahrgenommen wird. Ausgehend von einer Linienspannung von z.B. 19 V, einer Durchlassspannung der LED von 1,6 V, und einem idealen Schaltregler (mit einem Wirkungsgrad von 100%), würde der Melder theoretisch nur noch ca. 250 µA aufnehmen. Die tatsächliche Stromaufnahme liegt jedoch sehr viel höher, nicht nur wegen des realen Wirkungsgrades des im Wesentlichen den Halbleiterschalter, die Induktivität und die Freilaufdiode umfassenden Schaltreglers sondern vor allem wegen der Stromaufnahme der Steuerschaltung, die u.a. zur Begrenzung des Spitzenstromes durch die LED auf einen zulässigen Höchstwert benötigt wird. Diese Steuerschaltung umfasst bei dem bekannten Melder insbesondere einen Operationsverstärker, der während jedes Pulses eine Stromaufnahme von etwa 1 mA hat. Bei dem bekannten Melder ist dieser Stromverbrauch tolerierbar, einerseits weil die LED ohnehin mit einem Strom von einigen hundert mA betrieben wird, andererseits und vor allem, weil der Operationsverstärker nur innerhalb der kurzen "EIN"-Zeit von etwa 30 ms arbeitet, während der anschließenden Pause von etwa 970 ms jedoch stromlos ist. Für einen Melder, dessen LED statt dessen für die Dauer des Alarmzustandes ständig leuchten soll, ist dieser zusätzliche Stromverbrauch der Steuerschaltung des bekannten Melders jedoch nicht akzeptabel, weil sich dadurch seine Stromaufnahme im Alarmzustand auf rund 1,5 mA erhöhen würde, mit der Folge, dass die Anzahl der pro Meldelinie einsetzbaren Melder ganz erheblich sinken würde.

Der Erfindung liegt die Aufgabe zugrunde, einen Gefahrenmelder der im Oberbegriff des Anspruches 1 angegebenen Art zu schaffen, dessen LED im Alarmfall oder im Testzustand bei möglichst geringer Erhöhung der Stromaufnahme des Melders den Eindruck vermittelt, dass sie ständig leuchtet. Eine erste Lösung dieser Aufgabe sieht erfindungsgemäß vor, dass die Steuerschaltung aus einem Transistor besteht, dessen Kollektor einerseits über einen Widerstand mit dem Ausgang der Signalverarbeitungsschaltung verbunden ist und andererseits das getaktete Steuersignal für den Halbleiterschalter in Abhängigkeit von der an der Basis des Transistors anliegenden stromproportionalen Spannung liefert.

Im Kern besteht die Lösung darin, den Operationsverstärker der Steuerschaltung des bekannten Melders durch einen einzigen Transistor ersetzen, der im Alarmfall seine Speisespannung von der Signalverarbeitungsschaltung, in der Regel einem Mikrocontroller, erhält, selbst jedoch zunächst gesperrt bleibt, wodurch die an seinem Kollektor anliegende Speisespannung den Halbleiterschalter durchlässig schaltet, bis der im Lastkreis fließende Strom an dem Strommesswiderstand eine Spannung erzeugt, die als Basisspannung des Transistors diesen in den Durchlasszustand bringt, wodurch die Spannung an dem Kollektor des Transistors auf einen Wert sinkt, bei dem der Halbleiterschalter wieder sperrt. Nach dem dadurch eintretenden Abklingen des Stroms im Lastkreis mit der im Wesentlichen durch den Wert der Induktivität bestimmten Zeitkonstante befindet sich der Transistor wieder im Sperrzustand, so dass die von der Signalverarbeitungsschaltung gelieferte Speisespannung den Halbleiterschalter erneut durchlässig schaltet.

Bei geeigneter Dimensionierung hat diese Steuerschaltung im Alarmzustand über einen Versorgungs- oder Eingangsspannungsbereich von z.B. 9 V bis 18 V eine Stromaufnahme von weniger als 500 µA, d.h. weniger als die Hälfte der Stromaufnahme der Steuerschaltung eines Melders, dessen LED nach dem Prinzip des einleitend genannten Melders, jedoch im Alarmzustand in Dauerbetrieb statt im Blinkbetrieb, betrieben wird.

Eine weitere Lösung der oben genannten Aufgabe besteht bei einem Gefahrenmelder mit den Merkmalen des Oberbegriffs des Anspruches 6 darin, dass die Steuersehaltung aus einem Steuertransistor besteht, dass der Ausgang der Signalverarbeitungsschaltung mit dem Steuereingang des Halbleiterschalters und mit dem Kollektor eines Steuertransistors verbunden ist, dass der Strommesswiderstand dem Halbleiterschalter vorgeschaltet ist, und dass die an dem Strommesswiderstand abfallende, stromproportionale Spannung den Steuertransistor steuert.

Der Kern dieser zweiten Lösung besteht darin, dass im Unterschied zu der ersten Lösung der Strommesswiderstand nicht mehr im Lastkreis liegt sondern dem Halbleiterschalter vorgeschaltet ist. Deshalb ist der Strommesswiderstand nicht mehr während der gesamten Stromflusszeit im Lastkreis sondern nur noch während der Ladezeit der Induktivität, also solange der Halbleiterschalter durchlässig geschaltet ist, stromdurchflossen. Diese Stromflusszeit (sowohl bei dieser als auch bei der ersten Lösung) ist annähernd umgekehrt proportional zur Eingangsspannung, verlängert sich also mit sinkender Eingangsspannung. Die Stromaufnahme des Melders gemäß der zweiten Lösung verringert sich im Vergleich zu der Stromaufnahme des Melders nach der ersten Lösung je nach Eingangsspannung um bis zu etwa 40 %.

Gegenstand der Unteransprüche 7 bis 9 sind Maßnahmen zur Verbesserung des Schaltverhaltens.

Durch die Ausgestaltung gemäß Anspruch 10 wird erreicht, dass die Steuerschaltung unterhalb einer vorgegebenen Eingangsspannung nicht mehr aktiviert wird.

Mit der Ausführungsform nach Anspruch 11 wird erreicht, dass die Steuerschaltung mit geringer Stromaufnahme selbstschwingend ist, solange die Signalverarbeitungsschaltung ein Freigabesignal liefert.

Die Erfindung wird nachfolgend anhand der Zeichnung erläutert, die beispielhaft zwei Ausführungsformen einer LED-Steuerschaltung nach der Erfindung für einen Gefahrenmelder an sich bekannter Art zeigt, d.h. einen Melder, der mit einer Zentrale kommuniziert, und von dieser oder aus einer eingebauten Batterie seine Versorgungsspannung bezieht sowie mindestens einen für eine physikalische Größe empfindlichen Sensor und eine Signalverarbeitungsschaltung umfasst, die im Alarmzustand des Melders an einem Ausgang eine Spannung oder ein Freigabesignal für eine LED-Steuerschaltung erzeugt.
- Fig. 1: zeigt eine LED-Steuerschaltung entsprechend der ersten Lösung nach der Erfindung und
- Fig. 2: zeigt eine LED-Steuerschaltung entsprechend der zweiten Lösung nach der Erfindung.

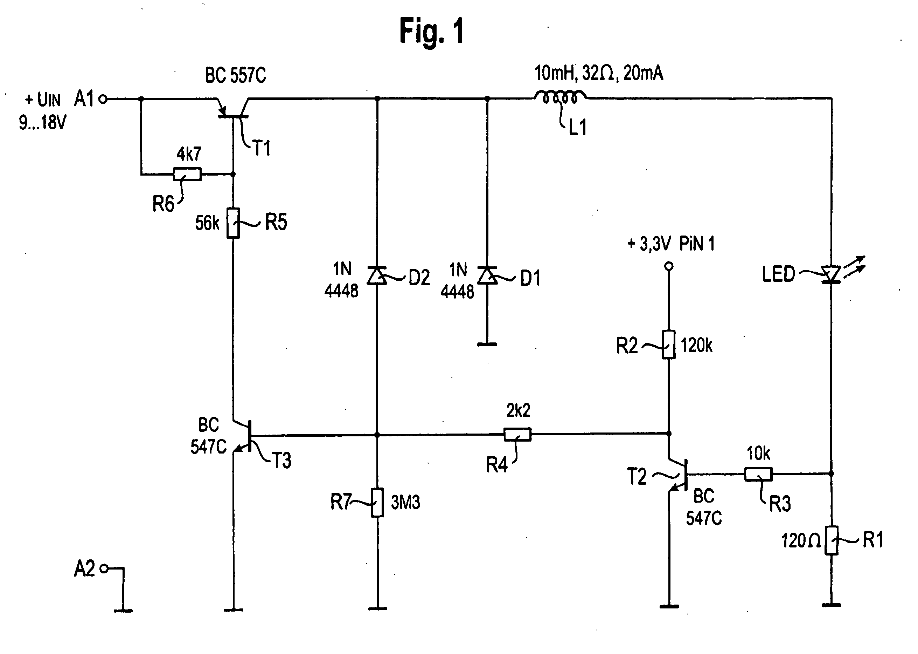

Die Schaltung gemäß Fig. 1 erhält am Anschluss A1 eine positive Versorgungs- oder Eingangsspannung gleich der Linienspannung von z.B. zwischen 9 und 18 V. Der Anschluss A2 liegt auf Masse. In Serie zwischen A1 und A2 liegen ein PNP-Schalttransistor T1, eine Induktivität L1, eine low current LED und ein Strommesswiderstand R1. Parallel zu der Serienschaltung aus L1 und der LED liegt eine Freilaufdiode D1.

Ein nicht dargestellter Mikroprozessor, der die Signalverarbeitungsschaltung des ebenfalls nicht dargestellten Melders bildet, hat u.a. den dargestellten PIN 1, der im Ruhe- oder Bereitschaftszustand einen L-Pegel von etwa 0 V und im Test- oder Alarmzustand des Melders einen H-Pegel von z.B. + 3,3 V hat. An diesem PIN 1 ist der Kollektor eines NPN-Transistors T2 über einen Widerstand R2 angeschlossen. Der Emitter von T2 liegt auf Masse. Die Basis von T2 ist über einen Widerstand R3 mit dem Verbindungspunkt zwischen der LED und dem Strommesswiderstand R1 verbunden. Der Kollektor von T2 ist über einen Widerstand R4 mit der Basis eines weiteren NPN-Transistors T3 verbunden, dessen Emitter ebenfalls auf Masse liegt und dessen Kollektor über einen Widerstand R5 mit der Basis des Schalttransistors T1 verbunden ist, die außerdem über einen Widerstand R6 mit dem Emitter verbunden ist. Die Basis von T3 ist über einen hochohmigen Widerstand R7 mit Masse und über eine Klemmdiode D2 mit dem gemeinsamen Anschluss des Kollektors des Schalttransistors T1 und der Induktivität L1 verbunden.

Die Schaltung arbeitet wie folgt:
Solange PIN 1 auf L = 0 V liegt, ist T2 stromlos. T3 sperrt wegen R7. Deshalb ist auch T1 über R6 gesperrt.

Sobald PIN 1 auf H = 3,3 V geht, werden T3 über R2 und R4 und damit über R5 auch T1 leitend. T2 bleibt über R3 und R1 zunächst gesperrt. Während dessen entsteht in dem Lastkreis L1, LED und R1 ein linear ansteigender Strom, so dass die LED zu leuchten beginnt. Der Strom erzeugt über R1 eine proportionale Spannung. Sobald diese gleich der Basis/Emitter-Spannung von T2, d.h. etwa gleich 0,6 V ist, wird T2 leitend, so dass T3 und somit auch T1 sperren. Der Strom in dem Lastkreis klingt wegen L1 nun über D1 exponentiell ab. Entsprechend der Durchlassspannung von D1 liegen in dieser Phase die Kathode von D1 und damit auch die Kathode von D2 auf ca. - 0,6 V, wodurch die Basis von T3 auf dieses Potential geklemmt und damit T3 gesperrt gehalten wird, bis der Strom im Lastkreis vollständig abgeklungen ist. Nach dem Abklingen des Stroms im Lastkreis ist D2 wieder im Sperrzustand, mit der Folge, dass der unverändert an PIN 1 anliegende H-Pegel T3 wieder durchlässig schaltet.

Mit dem in Fig. 1 angegebenen Wert von L1 = 10 mH und einer Versorgungsspannung von 18 V erreicht der Strom im Lastkreis nach etwa 4 µs etwa 5 mA, entsprechend ca. 0,6 V über R1, wodurch T2 leitend wird und folglich T3 und T1 sperren. Nach ca. 23 µs ist der Strom im Lastkreis abgeklungen. Daraus ergibt sich eine Schaltfrequenz von ca. 37 kHz und für den Strom durch die LED ein Mittelwert von ca. 3 mA. Bei sinkender Versorgungsspannung verlängert sich im Wesentlichen nur die Zeit bis zum Erreichen des Spitzenstromes im Lastkreis, bei dem T2 leitend wird und damit T1 sperrt. Die Helligkeit der LED ist deshalb in weiten Grenzen unabhängig von der Versorgungsspannung.

Zur Aufrechterhaltung der Funktionsfähigkeit einer Brandmeldeanlage, die Melder mit der beschriebenen LED-Steuerschaltung umfasst, muss sichergestellt werden, dass die LED-Steuerschaltung unterhalb eines vorgegebenen Mindestwerts der Versorgungsspannung deaktiviert wird. Das wird durch die Dimensionierung des Verhältnisses von R5 zu R6 erreicht. Mit der im Schaltbild angegebenen Dimensionierung und einer Basis/Emitter-Spannung von T1 gleich 0,6 V ergibt sich eine Abschaltspannung von ca. 7,1 V.

Die mittlere Stromaufnahme der Schaltung beträgt bei einer Versorgungsspannung von 18 V knapp 500 µA und bei einer Versorgungsspannung von 9 V etwa 600 µA.

Durch Verwendung einer Induktivität mit einem größeren Wert als die angegebenen 10 mH, also z.B. von 20 mH, kann eine Verbesserung des Wirkungsgrades infolge geringerer Schaltfrequenz und dadurch verringertem Anteil der Umschaltverluste erreicht werden.

Grundsätzlich möglich wäre auch ein Verzicht auf D2. Dann würde T1 wieder leitend, sobald der Strom im Lastkreis soweit abgeklungen ist, dass T2 wieder sperrt. Die in L1 gespeicherte Energie würde somit nicht vollständig genutzt. Gleichzeitig würden die Umschaltverluste höher. Ohne D2 könnte alternativ an PIN 1 statt eines für die Dauer des Alarmzustandes konstanten H-Pegels ein entsprechend getaktetes Signal bereitgestellt werden, dessen Pulspause ausreichend lang bemessen sein müsste, dass eine Überlastung der LED infolge Durchlässigschaltens von T1 vor dem Abklingen des vorhergehenden Strompulses in dem Lastkreis ausgeschlossen ist.

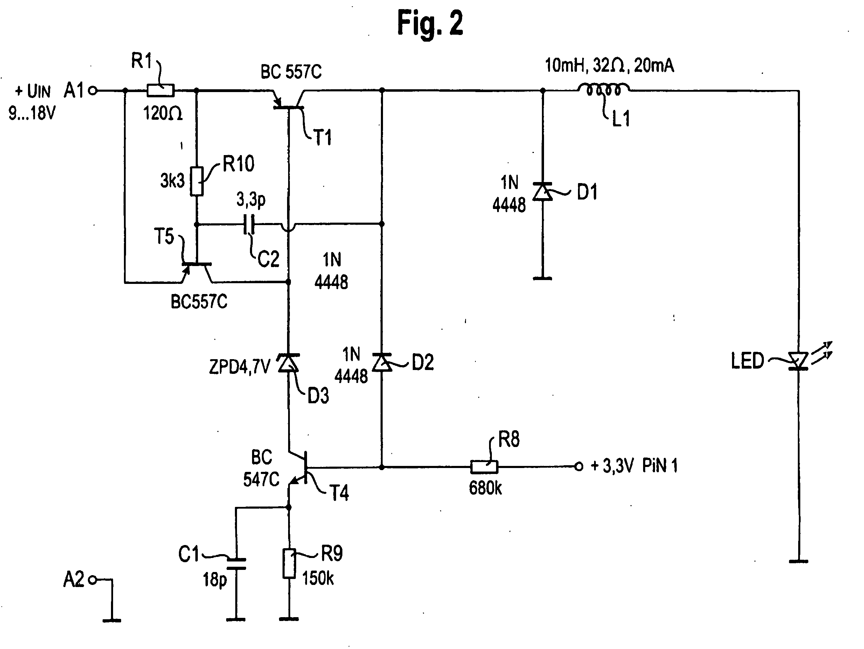

Bei der LED-Steuerschaltung nach Fig. 1 liegt der Strommesswiderstand R1 ständig im Lastkreis, verbraucht also Leistung auch in der Abklingphase des Strompulses, obwohl R1 nur während der Stromanstiegszeit benötigt wird. Diesen Nachteil vermeidet die LED-Steuerschaltung gemäß Fig. 2, mit der Folge einer weiteren Senkung des mittleren Stromverbrauchs der Steuerschaltung bei gleicher Helligkeit oder Leuchtstärke der LED.

Bauelemente mit gleicher Funktion wie in Fig. 1 sind mit dem selben Bezugszeichen versehen und werden nicht nochmals erläutert. Im Unterschied zu Fig. 1 liegt der Strommesswiderstand R1 zwischen dem Versorgungsspannungsanschluss A1 und dem Emitter des Schalttransistors T1. Der Pegel an PIN 1 gelangt über R8 an die Basis eines Transistors T4, so dass dieser bei einem H-Pegel an PIN 1 durchlässig schaltet. Im Emitterzweig von T4 liegt ein Strombegrenzungswiderstand R9, der zur Beschleunigung des Umschaltens mit einem kleinen Kondensator C1 überbrückt ist. Der Kollektor von T4 ist über einer Zenerdiode D3 mit der Basis des Schalttransistors T1 verbunden, so dass dieser durchschaltet. T4 kann entfallen, wenn PIN 1 einen zum Durchschalten von T1 ausreichenden Basisstrom für T1 zur Verfügung stellt. Anstelle von D3, deren Funktion unten erläutert werden wird, kann ein Widerstand treten. Der Stromanstieg im Lastkreis L1, LED führt zu einem Spannungsabfall über dem Strommesswiderstand R1. Dieser Spannungsabfall liegt als Basis-/Emitterspannung an einem Steuertransistor T5, dessen Kollektor mit der Basis von T1 verbunden ist. Sobald der Laststrom seinen vorgegebenen Wert von wiederum z.B. 5 mA entsprechend 0,6 V über R1 erreicht hat, wird T5 durchlässig und sperrt dadurch T1. Dieser Abschaltvorgang wird durch einen kleinen Kondensator C2 zwischen der Basis von T5 und dem Kollektor von T1 erheblich beschleunigt.

Im Übrigen ist die Funktion der LED-Steuerschaltung nach Fig. 2 die gleiche wie diejenige der LED-Steuerschaltung nach Fig 1. Insbesondere sorgt auch hier die Klemmdiode D2 dafür, dass die Steuerschaltung bei niedrigstem Leistungsverbrauch selbstschwingend ist, solange an PIN 1 ein H-Pegel anliegt. Auch in dieser Ausführungsform ist die Helligkeit der LED unabhängig von der Versorgungsspannung.

Die Zenerdiode D3 bewirkt eine Deaktivierung der Steuerschaltung unterhalb einer vorgegebenen Versorgungsspannung. Diese Abschaltspannung errechnet sich in der angegebenen Dimensionierung aus dem H-Pegel von 3,3 V minus die Basis/Emitter-Spannung von T4 plus die Zenerspannung von D3 plus die Basis/Emitter-Spannung von T1, d.h. 3,3 V - 0,6 V + 4,7 V + 0,6 V = 8 V. Die Abschaltspannung lässt sich also durch Wahl der Zenerspannung von D3 sehr einfach einstellen.

Die mittlere Stromaufnahme der LED-Steuerschaltung in dieser Ausführungsform beträgt bei 18 V ca. 280 µA und bei 9 V ca. 520 µA, so dass der Leistungsverbrauch dieser Ausführungsform bei gleicher Helligkeit der LED bei einer Versorgungsspannung von 18 V um ca. 40 %, und bei einer Versorgungsspannung von 9 V um ca. 10 % niedriger als im Fall der Fig. 1 ist.

## Patentansprüche

1. Gefahrenmelder, insbesondere Brand- oder Einbruchmelder, der mit einer Zentrale entweder über eine zweiadrige Leitung oder drahtlos kommuniziert, und seine Versorgungsspannung über die zweiadrige Leitung von der Zentrale oder aus einer eingebauten Batterie bezieht und mindestens einen für eine physikalische Größe empfindlichen Sensor sowie eine Signalverarbeitungsschaltung umfasst, die u.a. im Alarmzustand des Melders an einem Ausgang (PIN 1) eine Spannung für eine Steuerschaltung erzeugt, deren Ausgang mit dem Steuereingang eines Halbleiterschalters (T1) verbunden ist, in dessen Lastkreis eine Freilaufdiode (D1) parallel zu einer Serienschaltung aus einer Induktivität (L1) und einer LED sowie ein Strommesswiderstand (R1) zur Erzeugung einer stromproportionalen Spannung liegen, die an einem Eingang der Steuerschaltung anliegt, um an deren Ausgang ein getaktetes Steuersignal für den Halbleiterschalter (T1) zu erzeugen, dessen lastseitiger Anschluss über eine Klemmdiode (D2) mit dem Ausgang der Steuerschaltung verbunden ist, **dadurch gekennzeichnet, dass** die Steuerschaltung aus einem Transistor (T2) besteht, dessen Kollektor einerseits über einen Widerstand (R2) mit dem Ausgang (PIN 1) der Signalverarbeitungsschaltung verbunden ist und andererseits das getaktete Steuersignal für den Halbleiterschalter (T1) in Abhängigkeit von der an der Basis des Transistors (T2) anliegenden stromproportionalen Spannung liefert.

2. Gefahrenmelder nach Anspruch 1, **dadurch gekennzeichnet, dass** der Kollektor des Transistors (T2) mit der Basis eines weiteren Transistors (T3) verbunden ist, dessen Kollektor mit dem Steuereingang des Halbleiterschalters (T1) verbunden ist.

3. Gefahrenmelder nach Anspruch 2, **dadurch gekennzeichnet, dass** zwischen die Basis des weiteren Transistors (T3) und den Verbindungspunkt zwischen dem Halbleiterschalter (T1) und der Induktivität (L1) eine Klemmdiode (D2) geschaltet ist, die den weiteren Transistor (T3) im Sperrzustand hält, bis der Strom in dem die Induktivität (L1), die LED und die Freilaufdiode (D1) umfassenden Lastkreis abgeklungen ist.

4. Gefahrenmelder nach Anspruch 2 oder 3, **dadurch gekennzeichnet, dass** der Halbleiterschalter aus einem Transistor (T1) besteht, dessen Basis als Steuereingang mit dem Kollektor des weiteren Transistors (T3) über einen Widerstand (R5) und mit seinem Emitter über einen weiteren Widerstand (R6) verbunden ist und dass das Verhältnis der Widerstände (R6, R5) so gewählt ist, dass der Schalttransistor (T1) bei einer Versorgungsspannung, die kleiner als ein vorgegebener unterer Grenzwert ist, gesperrt bleibt, um die Schaltung insgesamt zu deaktivieren.

5. Gefahrenmelder nach einem der Ansprüche 2 bis 4, **dadurch gekennzeichnet, dass** die Klemmdiode (D2) an die Basis des weiteren Transistors angeschlossen ist.

6. Gefahrenmelder, insbesondere Brand- oder Einbruchmelder, der mit einer Zentrale entweder über eine zweiadrige Leitung oder drahtlos kommuniziert und seine Versorgungsspannung über die zweiadrige Leitung von der Zentrale oder aus einer eingebauten Batterie bezieht und mindestens einen für eine physikalische Größe empfindlichen Sensor sowie eine Signalverarbeitungsschaltung umfasst, die u.a. im Alarmzustand des Melders an einem Ausgang (PIN 1) eine Spannung für eine Steuerschaltung erzeugt, deren Ausgang mit dem Steuereingang eines Halbleiterschalters (T1) verbunden ist, in dessen Lastkreis eine Freilaufdiode (D1) parallel zu einer Serienschaltung aus einer Induktivität (L1) und einer LED liegen, wobei ein Strommesswiderstand eine stromproportionale Spannung liefert, die den Takt des Steuersignals für den Halbleiterschalter (T1) bestimmt und eine Klemmdiode (D2) den Halbleiterschalter (T1) jeweils bis zum Abklingen des Stromes im Lastkreis gesperrt hält, **dadurch gekennzeichnet, dass** die Steuershaltung aus einem Steuertransistor (T5) besteht, dass der Ausgang (PIN1) der Signalverarbeitungsschaltung mit dem Steuereingang des Halbleiterschalters (T1) und mit dem Kollektor eines Steuertransistors (T5) verbunden ist, dass der Strommesswiderstand (R1) dem Halbleiterschalter (T1) vorgeschaltet ist, und dass die stromproportionale Spannung den Steuertransistor (T5) steuert.

7. Gefahrenmelder nach Anspruch 6, **dadurch gekennzeichnet, dass** der Ausgang (PIN 1) der Signalverarbeitungsschaltung mit der Basis eines Transistors (T4) verbunden ist, dessen Kollektor mit dem Steuereingang des Halbleiterschalters (T1) und dem Kollektor des Steuertransistors (T5) verbunden ist.

8. Gefahrenmelder nach Anspruch 7, **dadurch gekennzeichnet, dass** der Transistor (T4) in Kollektorbasisschaltung betrieben wird und dass parallel zu seinem Emitterwiderstand (R9) ein Mitkoppelkondensator (C1) liegt.

9. Gefahrenmelder nach einem der Ansprüche 6 bis 8, **dadurch gekennzeichnet, dass** die Basis des Steuertransistors (T5) über einen Mitkoppelkondensator (C2) mit dem Ausgang des Halbleiterschalters (T1) verbunden ist.

10. Gefahrenmelder nach einem der Ansprüche 6 bis 9, **dadurch gekennzeichnet, dass** dem Steuereingang des Halbleiterschalters (T1) eine Zenerdiode (D3) vorgeschaltet ist.

11. Gefahrenmelder nach einem der Ansprüche 7 bis 9, **dadurch gekennzeichnet, dass** die Klemmdiode (D2) an die Basis des Transistors (T3) angeschlossen ist.

## Claims

1. An emergency alarm, especially a fire or intrusion alarm, which communicates with a central unit either via a two-lead line or wirelessly, and obtains its supply voltage via the two-lead line from the central unit or from a built-in battery and comprises at least one sensor sensitive to a physical quantity and a signal processing circuit which generates, among other things, a voltage for a control circuit at one output (PIN 1) in the alarm state of the alarm, the output of which is connected with the control input of a semiconductor switch (T1), in the load circuit of which are disposed a freewheeling diode (D1) parallel to a series connection consisting of an inductance (L1) and an LED and a current measuring resistor (R1) for generating a current-proportional voltage applied to an input of the control circuit in order to generate at its output a clocked control signal for the semiconductor switch (T1) whose connection on the load side is connected via a clamping diode (D2) with the output of the control circuit, **characterized in that** the control circuit consists of a transistor (T2) whose collector is connected on the one hand via a resistor (R2) with the output (PIN 1) of the signal processing circuit and supplies on the other hand the clocked control signal for the semiconductor switch (T1) depending on the current-proportional voltage applied to the base of the transistor (T2).

2. An emergency alarm according to claim 1, **characterized in that** the collector of the transistor (T2) is connected with the base of a further transistor (T3) whose collector is connected with the control input of the semiconductor switch (T1).

3. An emergency alarm according to claim 2, **characterized in that** a clamping diode (D2) is switched between the base of the further transistor (T3) and the connection point between the semiconductor switch (T1) and the inductance (L1), which diode keeps the further transistor (T3) in the blocking state until the current has dissipated in the load circuit comprising the inductance (L1), the LED and the freewheeling diode (D1).

4. An emergency alarm according to claim 2 or 3, **characterized in that** the semiconductor switch consists of a transistor (T1) whose base is connected at the control input with the collector of the further transistor (T3) via a resistor (R5) and with its emitter via a further resistor (R6), and the ratio of the resistors (R6, R5) is chosen in such a way that the switching transistor (T1) remains blocked at a supply voltage which is lower than a predetermined bottom threshold value in order to deactivate the circuit in its entirety.

5. An emergency alarm according to one of the claims 2 to 4, **characterized in that** the clamping diode (D2) is connected to the base of the further transistor.

6. An emergency alarm, especially a fire or intrusion alarm, which communicates with a central unit either via a two-lead line or wirelessly, and obtains its supply voltage via the two-lead line from the central unit or from a built-in battery and comprises at least one sensor sensitive for a physical quantity and a signal processing circuit which generates, among other things, a voltage for a control circuit at one output (PIN 1) in the alarm state of the alarm, the output of which is connected with the control input of a semiconductor switch (T1), in the load circuit of which are disposed a freewheeling diode (D1) parallel to a series connection consisting of an inductance (L1) and an LED, with a current measuring resistor (R1) supplying a current-proportional voltage which determines the cycle of the control signal for the semiconductor switch (T1) and a clamping diode (D2) keeps the semiconductor switch (T1) blocked until the dissipation of the current in the load circuit, **characterized in that** the control circuit consists of a control transistor (T5), the output (PIN 1) of the signal processing circuit is connected with the control input of the semiconductor switch (T1) and with the collector of a control transistor (T5, the current measuring resistor (R1) is connected upstream of the semiconductor switch (T1), and the current-proportional voltage controls the control transistor (T5).

7. An emergency alarm according to claim 6, **characterized in that** the output (PIN 1) of the signal processing circuit is connected with the base of a transistor (T4) whose collector is connected with the control input of the semiconductor switch (T1) and the collector of the control transistor (T5).

8. An emergency alarm according to claim 7, **characterized in that** the transistor (T4) is operated in collector-base circuit and a co-coupling capacitor (C1) is disposed parallel to its emitter resistor (R9).

9. An emergency alarm according to one of the claims 6 to 8, **characterized in that** the base of the control transistor (T5) is connected via a co-coupling capacitor (C2) with the output of the semiconductor switch (T1).

10. An emergency alarm according to one of the claims 6 to 9, **characterized in that** a Zener diode (D3) is connected upstream of the control input of the semiconductor switch (T1).

11. An emergency alarm according to one of the claims 7 to 9, **characterized in that** the clamping diode (D2) is connected to the base of the transistor (T3).

## Revendications

1. Détecteur de danger, notamment détecteur d'incendie ou détecteur d'intrusion, qui communique avec une centrale soit par l'intermédiaire d'un câble bifilaire soit sans fil et qui reçoit sa tension d'alimentation de la centrale par l'intermédiaire du câble bifilaire ou d'une batterie incorporée et qui comprend au moins un capteur sensible à une grandeur physique ainsi qu'un circuit de traitement du signal qui, entre autres lorsque le détecteur est en état d'alerte, génère à une sortie (PIN 1) une tension pour un circuit de commande dont la sortie est raccordée à l'entrée de commande d'un commutateur semi-conducteur (T1), dans le circuit d'alimentation duquel se trouvent une diode de roue libre (D1), en parallèle avec un circuit en série composé d'une bobine d'inductance (L1) et d'une DEL, ainsi qu'une résistance de mesure de courant (R1) destinée à générer une tension proportionnelle au courant relevée à une entrée du circuit de commande, afin de générer à sa sortie un signal cadencé pour le commutateur semi-conducteur (T1) dont le branchement du côté de la charge est connecté à la sortie du circuit de commande par l'intermédiaire d'une diode de calage (D2), **caractérisé en ce que** le circuit de commande est constitué d'un transistor (T2), dont le collecteur est connecté d'une part à la sortie (PIN 1) du circuit de traitement du signal par l'intermédiaire d'une résistance (R2) et qui fournit d'autre part le signal de commande cadencé pour le commutateur semi-conducteur (T1) en fonction de la tension proportionnelle au courant relevée à la base du transistor (T2).

2. Détecteur de danger selon la revendication 1, **caractérisé en ce que** le collecteur du transistor (T2) est connecté avec la base d'un autre transistor (T3) dont le collecteur est connecté avec l'entrée de commande du commutateur semi-conducteur (T1).

3. Détecteur de danger selon la revendication 2, **caractérisé en ce qu'**une diode de calage (D2) est branchée entre la base de l'autre transistor (T3) et le point de connexion entre le commutateur semi-conducteur (T1) et la bobine d'inductance (L1), cette diode de calage maintenant l'autre transistor (T3) en un état bloqué jusqu'à ce que le courant dans le circuit d'alimentation comprenant la bobine d'induction (L1), la DEL et la diode de roue libre (D1) se soit affaibli.

4. Détecteur de danger selon les revendications 2 ou 3, **caractérisé en ce que** le commutateur semi-conducteur est constitué d'un transistor (T1) dont la base, qui fait office d'entrée de commande, est connectée avec le collecteur de l'autre transistor (T3) par l'intermédiaire d'une résistance (R5) et avec son émetteur par l'intermédiaire d'une autre résistance (R6) et que la relation des résistances (R6, R5) est choisie de telle manière que le transistor commutateur (T1) reste bloqué lors d'une tension d'alimentation inférieure à une valeur limite inférieure imposée, afin de désactiver le circuit dans son ensemble.

5. Détecteur de danger selon l'une quelconque des revendications 2 à 4, **caractérisé en ce que** la diode de calage (D2) est reliée à la base de l'autre transistor.

6. Détecteur de danger, notamment détecteur d'incendie ou détecteur d'intrusion, qui communique avec une centrale soit par l'intermédiaire d'un câble bifilaire soit sans fil et qui reçoit sa tension d'alimentation de la centrale par l'intermédiaire du câble bifilaire ou d'une batterie incorporée et qui comprend au moins un capteur sensible à une donnée physique ainsi qu'un circuit de traitement du signal qui, entre autres lorsque le détecteur est en état d'alerte, génère à une sortie (PIN 1) une tension pour un circuit de commande dont la sortie est connectée à l'entrée de commande d'un commutateur semi-conducteur (T1), dans le circuit d'alimentation duquel se trouvent une diode de roue libre (D1), en parallèle avec un circuit en série composé d'une bobine d'inductance (L1) et d'une DEL, où une résistance de mesure de courant fournit une tension proportionnelle au courant qui détermine la cadence du signal de commande pour le commutateur semi-conducteur (T1) et où une diode de calage (D2) maintient le commutateur semi-conducteur (T1) en position bloquée respectivement jusqu'à l'affaiblissement du courant dans le circuit d'alimentation, **caractérisé en ce que** le circuit de commande est constitué d'un transistor de commande (T5), que la sortie (PIN 1) du circuit de traitement du signal est connectée avec l'entrée de commande du commutateur semi-conducteur (T1) et avec le collecteur du transistor de commande (T5), que la résistance de mesure de courant (R1) est branchée en amont du commutateur semi-conducteur (T1) et que la tension proportionnelle au courant commande le transistor de commande (T5).

7. Détecteur de danger selon la revendication 6, **caractérisé en ce que** la sortie (PIN 1) du circuit de traitement du signal est connectée à la base d'un transistor (T4), dont le collecteur est connecté avec l'entrée de commande du commutateur semi-conducteur (T1) et avec le collecteur du transistor de commande (T5).

8. Détecteur de danger selon la revendication 7, **caractérisé en ce que** le transistor (T4) fonctionne en circuit collecteur-base et qu'un condensateur de réaction positive (C1) est monté en parallèle avec sa résistance émetteur (R9).

9. Détecteur de danger selon l'une quelconque des revendications 6 à 8, **caractérisé en ce que** la base du transistor de commande (T5) est connectée avec la sortie du commutateur semi-conducteur (T1) par l'intermédiaire d'un condensateur de couplage (C2).

10. Détecteur de danger selon l'une quelconque des revendications 6 à 9, **caractérisé en ce qu'**une diode Zener (D3) est branchée en amont de l'entrée de commande du commutateur semi-conducteur (T1).

11. Détecteur de danger selon l'une quelconque des revendications 7 à 9, **caractérisé en ce que** la diode de calage (D2) est connectée à la base du transistor (T3).
